# EUROPEAN PATENT APPLICATION

(11) **EP 1 867 586 A1**
(43) Date of publication of application: **19.12.2007**
(21) Application number: 07252309.5
(22) Date of filing: 08.06.2007
(51) Int. Cl.: B65D 90/00, B65D 90/02, B62D 33/04

(54) **Refrigerated container with anti-collision plate**

(30) Priority: 13.06.2006 CN 200620017426 U
(71) Applicant: China International Marine Containers (Group) Ltd., Shekou Industrial Zone Shenzhen, Guangdong, 518067 (CN); SHANGHAI CIMC REEFER CONTAINERS Co., Ltd., Baoshan District Shanghai 201908 (CN)
(72) Inventor: Wang, Shiliang, Shanghai 201908 (CN)
(74) Representative: Keltie, David Arthur

(57) **Abstract**

The present invention discloses a refrigerated container with an anti-collision plate (23). The refrigerated container comprises a side wall (2) having an inner side plate (21) and an outer side plate (25). The anti-collision plate is arranged at a lower portion of a surface of the inner side plate facing the outer side plate. The anti-collision plate is formed with depressed portions (232) and protruded portions (233) at its upper edge. The depressed portions and the protruded portions may be in shape of rectangle, triangle, trapezoid or wave. By arranging depressed portions and protruded portions at the upper edge of the anti-collision plate, the conventional linear type abrupt change of cross-section of the inner side plate at the upper edge of the anti-collision plate becomes a curvilinear type abrupt change of cross-section, and thus the extent of concentration of stress of the inner side plate at the abrupt change of cross-section is significantly lowered. Consequently, the strength and rigidity of the inner side plate are increased, thereby increasing a damage resistance of the side walls against the disadvantageous external force and improving the safety performance and service life of the refrigerated container.

## Description

### FIELD OF THE INVENTION

The present invention relates to a refrigerated container, and more particularly to a refrigerated container with an anti-collision plate.

### BACKGROUND OF THE INVENTION

Either of the side walls of a refrigerated container is usually composed of an inner side plate, an outer side plate and a foamed layer between the inner side plate and the outer side plate. When loading/unloading goods, specific vehicles such as fork lift trucks may often contact or collide with the inner side plate of the refrigerated container, thereby tending to damage the inner side plate. For this, the lower portion of the inner side plate of the container (i.e. the portion of the inner side plate with a height of 400mm or less from a lower end of the inner side plate) is covered with an anti-collision plate which extends transversely throughout the lower portion of the inner side plate. The inner anti-collision plate is typically a rectangular plate member made of Muffler Grade Stainless Steel (MGSS) with a thickness of 0.7-1.6mm, and is spot-welded to an outer surface of the inner side plate (i.e. the surface facing the outer side plate or the foamed layer) so as to protect the inner side plate. As a result, a stepped region (a height difference) along an upper edge of the anti-collision plate is formed on the inner side plate. Thus, an abrupt change of cross-section will be generated in the inner side plate at the upper edge of the anti-collision plate. Once the inner side plate receives a force, especially a force directed to the outer side plate, a relatively large concentration of stress may be generated in the region of the inner side plate with the abrupt change of cross-section. The inner side plate may even deform permanently once the force exceeds a predetermined level and thus may cause disadvantageous effects on normal operation of the container.

### SUMMARY OF THE INVENTION

In view of the above-mentioned deficiencies of the refrigerated container in the prior art, the present invention aims to provide a refrigerated container which has an anti-collision plate capable of alleviating the concentration of stress due to the abrupt change of cross-section.

To accomplish the object of the present invention, there is provided a refrigerated container with an anti-collision plate, comprising a side wall having an inner side plate and an outer side plate the anti-collision plate being arranged at a lower portion of a surface of the inner side plate facing the outer side plate, wherein the anti-collision plate is formed with depressed portions and protruded portions at its upper edge.

According to an aspect of the present invention, the depressed portions and protruded portions may be alternately arranged.

According to an aspect of the present invention, the depressed portions and/or the protruded portions may be in a shape of rectangle, triangle, trapezoid or wave.

According to an aspect of the present invention, the inner side plate may be formed with a wavelike portion, and the anti-collision plate may be formed with a wavelike portion matching with the wavelike portion of the inner side plate.

According to an aspect of the present invention, the wavelike portion of the inner side plate may not extend to both ends of the inner side plate and the wavelike portion of the anti-collision plate may not extend to both ends of the anti-collision plate either (that is, the waves in the wavelike portions are blind waves).

According to an aspect of the present invention, the anti-collision plate may be secured to the inner side plate by riveting or spot-welding.

By arranging depressed portions and protruded portions at the upper edge of the anti-collision plate, the conventional linear type abrupt change of cross-section of the inner side plate at the upper edge of the anti-collision plate becomes a curvilinear type abrupt change of cross-section, and thus the extent of the concentration of stress at the abrupt change of cross-section is significantly lowered. Consequently, the strength and rigidity of the inner side plate are increased, thereby increasing the damage resistance of the side walls against the disadvantageous external force and improving the safety performance and service life of the refrigerated container.

### BRIEF DESCRIPTION OF THE DRAWINGS

The present invention will be described in detail with reference to the accompanying drawings and the embodiment(s). In the drawings:
FIG. 1 is a partial schematic sectional view of a preferred embodiment of a refrigerated container with an anti-collision plate in accordance with the present invention;
FIG. 2 is a schematic view of the preferred embodiment shown in FIG.1 viewed from arrow A, with the outer side plate removed; and
FIG. 3 is a cross-sectional view taken along line B-B in FIG. 2.

### DETAILED DESCRIPTION OF THE INVENTION

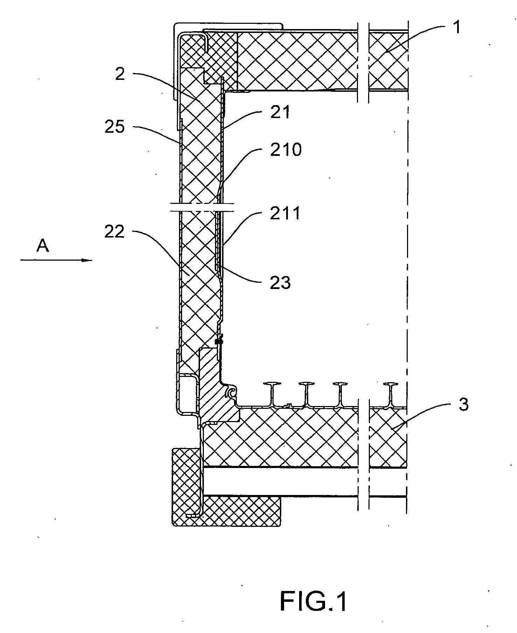

As shown in FIGS. 1, 2 and 3, a refrigerated container with an anti-collision plate in accordance with the present invention includes a container body composed of a roof panel 1, side walls 2 and a floor panel 3. Either of the side walls 2 generally includes an inner side plate 21, an outer side plate 25 and a foamed layer 22 sandwiched between the inner side plate 21 and the outer side plate 25. Herein, a lower portion 211 of the inner side plate 21 is the portion of the inner side plate 21 with a height of 400mm or less from a lower end of the inner side plate 21, and an upper portion 210 of the inner side plate 21 is the portion of the inner side plate 21 with a height of more than 400mm from the lower end of the inner side plate 21. The lower portion 211 of the inner side plate 21 is covered with an anti-collision plate 23 by welding or riveting. Especially, the anti-collision plate 23 is disposed on an outer surface of the inner side plate 21 facing the foamed layer 22. The anti-collision plate 23 is provided at its upper edge with a plurality of depressed portions 232 and a plurality of protruded portions 233 in a shape of rectangle , which are alternately arranged each other to thus realize a curvilinear type upper edge of the anti-collision plate 23. Due to the curvilinear type upper edge of the anti-collision plate 23, the linear abrupt change of cross-section of the inner side plate 21 at the upper edge of the anti-collision plate 23 becomes a curvilinear type abrupt change of cross-section, and thus the extent of the concentration of stress of the inner side plate 21 at abrupt change of cross-section is significantly lowered. Consequently, the strength and rigidity of the inner side plate 21 are increased, thereby increasing the damage resistance of the side walls against the disadvantageous external force and improving the safety performance and service life of the refrigerated container.

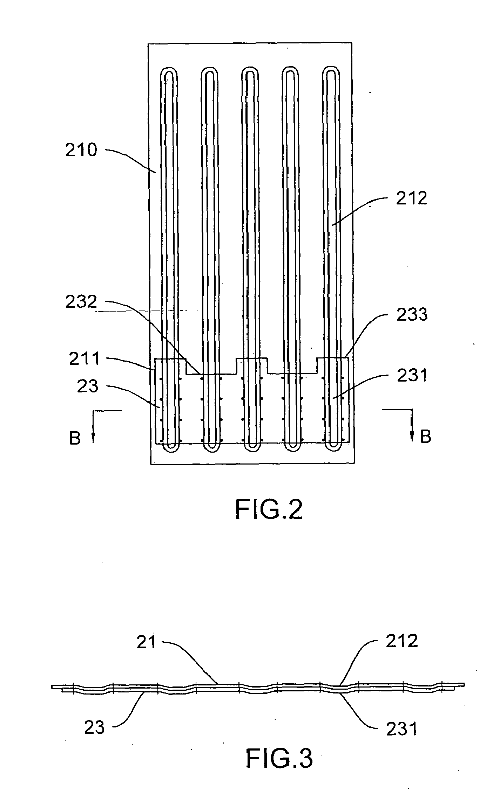

Further, as shown in FIGS. 2 and 3, the inner side plate 21 is formed with a wavelike portion 212, and the anti-collision plate 23 is also formed with a wavelike portion 231 corresponding to the wavelike portion 212 of the inner side plate 21. The profile and position of the wavelike portion 231 of the anti-collision plate 23 match with those of the wavelike portion 212 of the inner side plate 21 so as to enable a tight attachment of the anti-collision plate 23 to the outer surface of the inner side plate 21 and thus enhance the strength and rigidity of the inner side plate 21. Preferably, the wavelike portion 212 does not extend to both ends of the inner side plate 21 and the wavelike portion 231 does not extend to both ends of the anti-collision plate 23 (that is, the waves in the wavelike portions 212 and 231 are blind waves).

According to the present invention, it is not necessary to demarcate the so-called "upper portion 212" and "lower portion 211" at a height of 400mm as in the preferred embodiment. Instead, the demarcation line may be arranged at any suitable height according to specific requirements. In other words, the upper edge of the anti-collision plate 23 may be arranged at any suitable height of the inner side plate of the container.

In addition, other than the rectangular shape in the preferred embodiment, the protruded portion 233 may be in a shape of rectangle, triangle, trapezoid or wave. Similarly, the depressed portion 232 may be in a shape of rectangle, triangle, trapezoid or wave.

In the refrigerated container with an anti-collision plate according to the present invention, the position and shape of the anti-collision plate are not limited to the specific disclosure in the aforementioned preferred embodiment. All embodiments of the anti-collision plate, which enable a curvilinear type abrupt change of cross-section of the inner side plate at an upper edge of the anti-collision plate, shall fall into the scope of the present invention.

## Claims

1. A refrigerated container with an anti-collision plate, comprising a side wall having an inner side plate and an outer side plate, the anti-collision plate being arranged at a lower portion of a surface of the inner side plate facing the outer side plate, wherein the anti-collision plate is formed with depressed portions and protruded portions at its upper edge.

2. The refrigerated container as claimed in claim 1, wherein the depressed portions and protruded portions are alternately arranged.

3. The refrigerated container as claimed in claim 2, wherein the depressed portions and/or the protruded portions are in a shape of rectangle, triangle, trapezoid or wave.

4. The refrigerated container as claimed in anyone of claims 1-3, wherein the inner side plate is formed with a wavelike portion, and the anti-collision plate is formed with a wavelike portion matching with the wavelike portion of the inner side plate.

5. The refrigerated container as claimed in claim 4, wherein the wavelike portion of the inner side plate does not extend to both ends of the inner side plate and the wavelike portion of the anti-collision plate does not extend to both ends of the anti-collision plate either.

6. The refrigerated container as claimed in anyone of claims 1-3, wherein the anti-collision plate is secured to the inner side plate by riveting or spot-welding.
